# EUROPEAN PATENT APPLICATION

(11) **EP 0 996 036 A1**
(43) Date of publication of application: **26.04.2000**
(21) Application number: 99120633.5
(22) Date of filing: 18.10.1999
(51) Int. Cl.: G03D 15/00

(54) **Method, apparatus, and recording medium for ordering photographic prints**

(30) Priority: 20.10.1998 JP 29848298
(71) Applicant: Fuji Photo Film Co., Ltd., Kanagawa-ken (JP)
(72) Inventor: Seto, Satoshi, c/o Fuji Photo Film Co., Ltd., Ashigarakami-gun, Kanagawa-ken (JP)
(74) Representative: Klunker . Schmitt-Nilson . Hirsch

(57) **Abstract**

A workload of a user is reduced at the time of placing an order for photographic images. A negative film of a user 1 is read by reading means 3 of a laboratory 2, and image data S representing photographic images are obtained. An order file F correlating the image data S with the content of an order is generated by order file generating means 5, and recorded in a CD-R together with the image data S by recording means 4. The user 1 browses the images recorded in the CD-R and opens the order file F to describe the content of an order, such as quantity. An order file F' having the order content is provided to the laboratory 2 together with the CD-R, and printed images are output by output means 7, based on the order information described in the order file F'.

## Description

### BACKGROUND OF THE INVENTION

### Field of the Invention

The present invention relates to a method and an apparatus for receiving an order regarding a photographic image, and also to a computer-readable recording medium storing a program to cause a computer to execute the order receiving method.

### Description of the Related Art

Digital photographic service systems for carrying out various kinds of digital photographic services, such as storing or recording images photographed by a user in an image server or in a CD-R after digitization of the images, and receiving an order for additional printing or the like of the images, have been known. In such a system, a user installs in his/her personal computer viewer software dedicated to reproducing images recorded in a CD-R, and reproduces the images by using the software. In order to place an order for additional printing, the user generates an order file describing the content of the order by using an ordering function of the viewer software. The user brings the order file and the CD-R to a DPE store and the DPE store provides the order file and the CD-R to a laboratory. In this manner, the requested photographic images can be generated.

As a form of such digital photographic services, a network photographic service system has been proposed. In a network photographic service system, digital images of users are stored (registered) in a system of a service provider and an order for printing or the like is received via a network such as the Internet.

In such a network photographic service system, in order to provide the digital photographic services to users, a scanner, a printer, a server computer having a large capacity disc (hereinafter called an image server) are installed in a wholesale laboratory. Photographs obtained by a user are stored in the image server and various kinds of services such as ordering additional printing of the photographs, attaching the photographs to an E-mail message, and downloading the photographic image data can be provided by enabling the user to access the image server via a network. In such a service, a user accesses the image server by using predetermined application software installed in his/her personal computer, and can order printing of the photographs described above. Meanwhile, in the laboratory, photographic processing such as additional printing, generating picture postcards, generating an album, image composition, and trimming is carried out based on order information from the user, and the image data after the processing are transferred to the user or an E-mal message notifying the user of completion of the processing is sent to the user.

The "order information" herein referred to means information such as a processing number specifying the kind of service (such as additional printing or picture postcard generation), an image number for specifying a photographic image, a print size, the quantity of prints, quality of printing paper (glossy or non-glossy), thickness of the paper, the content of the photographic processing, and trimming specification.

However, when an order regarding a photographic image is placed, a user has to generate the order information by accurately relating the photographic image obtained from a CD-R or obtained by downloading with the content of the order regarding the photographic image. Therefore, a workload on the user is heavy, and the order content may be erroneous.

### SUMMARY OF THE INVENTION

The present invention has been conceived based on consideration of the above problems. An object of the present invention is to provide a method and an apparatus which receive an order regarding a photographic image and enable easy generation of order information, and also a computer-readable recording medium storing a program to cause a computer to execute the order receiving method.

An order receiving method of the present invention is a method of receiving an order for outputting a photographic image represented by digital image data, and the order receiving method comprises the step of:
generating an order file enabling selection of the content of an order corresponding to the photographic image.

The "order for outputting a photographic image" refers to an order for various forms of output such as printing, additional printing, and trimming of a photographic image, printing a photographic image on a T-shirt, generating a picture postcard, and output to a CD-R.

As the "order file enabling selection of the content of an order corresponding to the photographic image", various forms can be used. For example, the content of an order may be written in or selected from the order file, according to each image in an index image. Alternatively, the content of an order may be written in or selected from the order file according to the name of a file of a photographic image. As the content of an order, a processing number indicating the kind of service (such as additional printing and picture postcard generation), an image number for specifying a photographic image, a size of a print, the quantity of the prints, the quality of printing paper (glossy, or non-glossy), thickness of the paper, the content of photographic processing, information for specifying trimming, and the like can be used. In the order file, the content of an order is described in blanks or easily selected by checking a box. In the present invention, the order information refers to information regarding the content described in the order file.

In the order receiving method of the present invention, it is preferable for the order file to have a general file format. However, the order file may be provided to a user together with software dedicated to opening the order file.

As the "general file format", the HTML format which can be read by web browser software or the text format can be used, for example.

It is preferable for the order file to be provided to a user together with the digital image data so that
the order information generated according to the order file regarding the photographic image can be received, and
output of the photographic image can be carried out based on the order information having been received.

To "provide digital image data to a user" means not only to provide digital image data representing a photographic image at a high resolution enabling printing thereof as they are but also to provide digital image data representing a photographic image at a low resolution such as a thumbnail image.

The order file and the digital image data may be provided to a user via a removable recording medium or via a network.

An order receiving apparatus of the present invention is an apparatus for receiving an order for outputting a photographic image represented by digital image data, and the apparatus comprises:
order file generating means for generating an order file enabling selection of the content of an order corresponding to the photographic image.

It is preferable for the order receiving apparatus of the present invention to further comprise:
providing means for providing the order file and the digital image data to a user;
receiving means for receiving the content of an order generated based on the order file; and
output means for outputting the photographic image based on the content of the order having been received.

The providing means may provide the order file and the digital image data by recording the order file and the digital image data in a removable recording medium. Alternatively, the providing means may provide the file and the data via a network.

The order receiving method of the present invention may be provided as a program recorded in a computer-readable recording medium to cause a computer to execute the method.

According to the present invention, the order file enabling selection of the content of an order corresponding to a photographic image is generated. By providing this order file to a user, the user does not need to correlate a photographic image he/she wishes to order with the content of the order. In this manner, the order information can be generated without presenting a problem for the user. Furthermore, since the photographic images are related to the content of an order regarding the images in advance, an erroneous order can be prevented from being placed.

Moreover, by using a general file format for the order file, no special software for opening the order file is necessary for a user, and the order file can be easily dealt with.

### BRIEF DESCRIPTION OF THE DRAWINGS

Figure 1 is a block diagram showing an outline configuration of a printing order system to which an apparatus for receiving an order regarding a photographic image is applied according to a first embodiment of the present invention;
Figure 2 is an illustration showing the content of an order file;
Figure 3 is a flow chart showing an operation of the first embodiment;
Figure 4 is an illustration showing a confirmation screen;
Figure 5 is a block diagram showing an outline configuration of a network photographic service system to which an apparatus for receiving an order regarding a photographic image is applied according to a second embodiment of the present invention;
Figure 6 is a flow chart showing an operation of the second embodiment; and
Figure 7 is a diagram showing an example of another order file.

### DESCRIPTION OF THE PREFERRED EMBODIMENTS

Hereinafter, embodiments of the present invention will be explained with reference to the accompanying drawings.

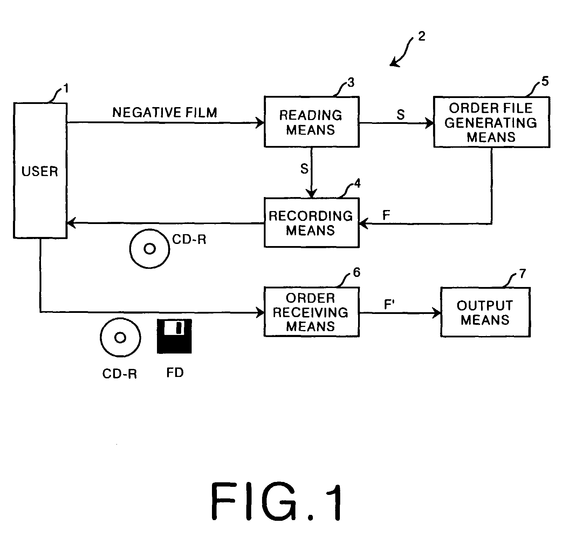

Figure 1 is a block diagram showing an outline configuration of a printing order system to which an apparatus for receiving an order regarding a photographic image is applied according to a first embodiment of the present invention. As shown in Figure 1, the printing order system to which the order receiving apparatus according to the first embodiment is applied exchanges data and a printed image between a user 1 and a laboratory 2.

The laboratory 2 carries out printing of a photographic image in response to a printing order placed by the user 1. The laboratory 2 comprises reading means 3 for obtaining image data S by reading photographic images from a film brought in by the user 1, recording means 4 for recording the image data S having been read in a removable recording medium such as a CD-R, order file generating means 5 for generating an electronic file F for ordering (called an order file) which will be explained later, order receiving means 6 for receiving an order file F' in which the content of an order has been described by the user 1, and output means 7 for carrying out printing based on the content described in the order file F'. The user 1 may place an order for printing directly from the laboratory 2, or via an order receiving store for dedicatedly carrying out order reception.

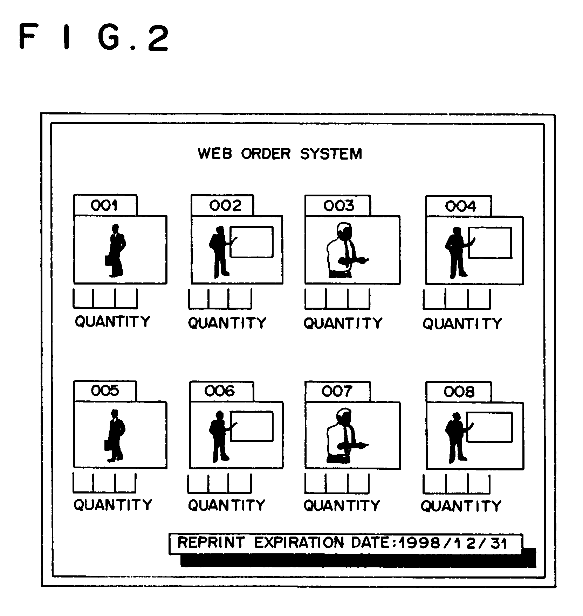

The order file generating means 5 generates the order file F by inserting blanks used for describing the quantity of prints corresponding to each image in an index image in which thumbnail images of the images whose printing can be requested by the user 1 are laid out as shown in Figure 2, for example. As the format of the order file F, a general format such as the HTML format or the text format can be used.

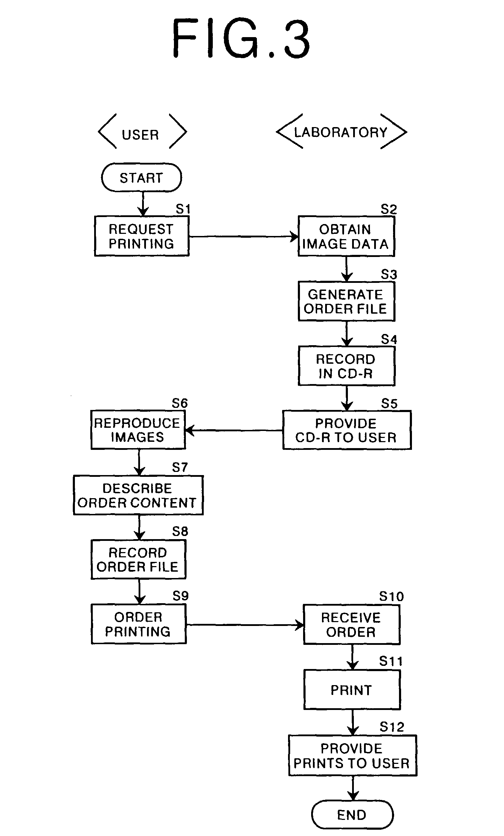

An operation of the first embodiment will be explained next. Figure 3 is a flow chart showing the operation of the first embodiment. The user 1 requests printing (Step S1), and the laboratory 2 reads a film brought in by the user 1 by using the reading means 3 to obtain the image data S representing the photographic images recorded on the film (Step S2). The image data S obtained in this manner are input to the recording means 4 and to the order file generating means 5. The order file generating means 5 generates thumbnail images and an index image in which the thumbnail images are laid out by reducing the images represented by the image data S. The order file F is generated by inserting blanks to be used for describing the quantity in the index image, as shown in Figure 2 (Step S3). The generated order file F is input to the recording means 4 and recorded in a CD-R together with the image data S by the recording means 4 (Step S4). The CD-R stores viewer software for reproducing the image data S recorded therein.

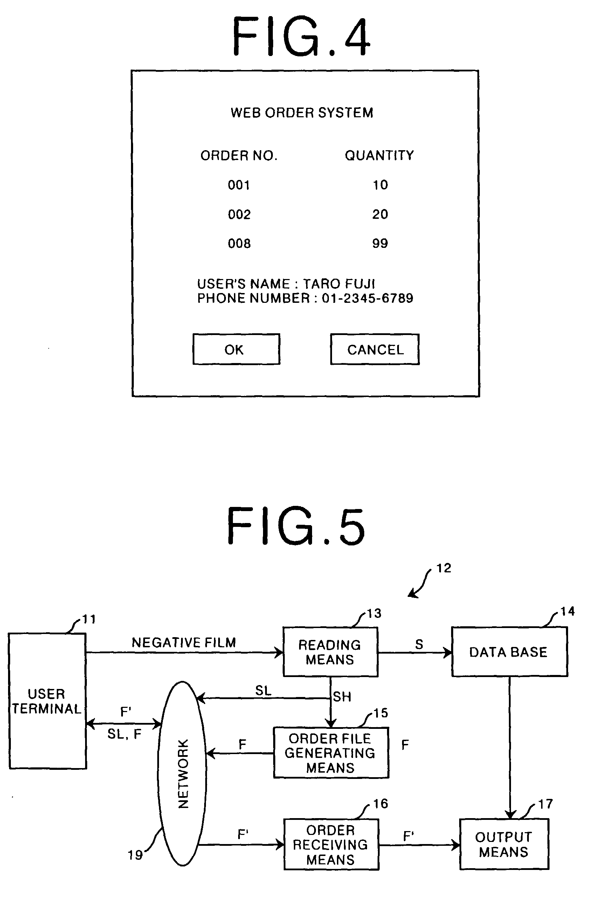

The CD-R storing the image data S and the order file F is provided to the user 1 (Step S5). The user 1 installs the viewer software recorded in the CD-R in his/her personal computer, and reproduces the images represented by the image data S on the monitor of the computer (Step S6). The user 1 opens the order file F by using web browser software or the like in order to place an order for printing, and displays on the monitor an order screen such as the screen shown in Figure 2. The user 1 fills in the blanks with the quantity of desired images and writes the information in the order file F (Step S7). In order to confirm the order file F' describing the content of the order, a confirmation screen such as the screen shown in Figure 4 is displayed and the user clicks the OK button if the content is correct. Meanwhile, if the content is not correct, the user clicks the cancel button and describes the order information again. The order file F' having the content described in this manner is recorded in a recording medium such as a floppy disc (Step S8).

The user 1 brings the FD storing the order file F' and the CD-R to the laboratory 2 and requests printing (Step S9). The laboratory 2 receives the order file F' by using the order receiving means 6 (Step S10), and carries out printing according to the order content described in the order file F' by using the output means 7 (Step S11). The printed images are then provided to the user 1 (Step S12) and the processing is completed.

As has been described above, in the first embodiment, the order file F enabling selection of the order content corresponding to the photographic images whose printing can be requested by the user 1 is provided to the user 1. Therefore, the user 1 does not need to relate the photographic images he/she wishes to order with the content of the order, and the user can generate the order information without a problem. Furthermore, since the photographs and the order content are related in advance, an erroneous order of printing is prevented from being placed.

A second embodiment of the present invention will be explained next. Figure 5 is a block diagram showing an outline configuration of a network photographic service system to which an apparatus for receiving an order regarding a photographic image is applied according to the second embodiment of the present invention.

In Figure 5, a user terminal 11 is a user's personal computer or a terminal for dealing with an order and located in a service provider or the like for users who do not posses a personal computer. A laboratory 12 is a system for carrying out printing. The laboratory 12 comprises reading means 13 for obtaining image data S by reading images recorded on a film brought in by the user, a database 14 for storing the image data S having been read, order file generating means 15 for generating an electronic file (called an order file) used for placing an order, order receiving means 16 for receiving an order file F' in which the content of an order has been described by the user, and output means 17 for carrying out printing based on the order content described in the order file F'. The user may request printing directly from the laboratory 12, or register images via an order receiving store dedicated to receiving orders. The user terminal 11 and the laboratory 12 exchange the images and the order files via a network 19.

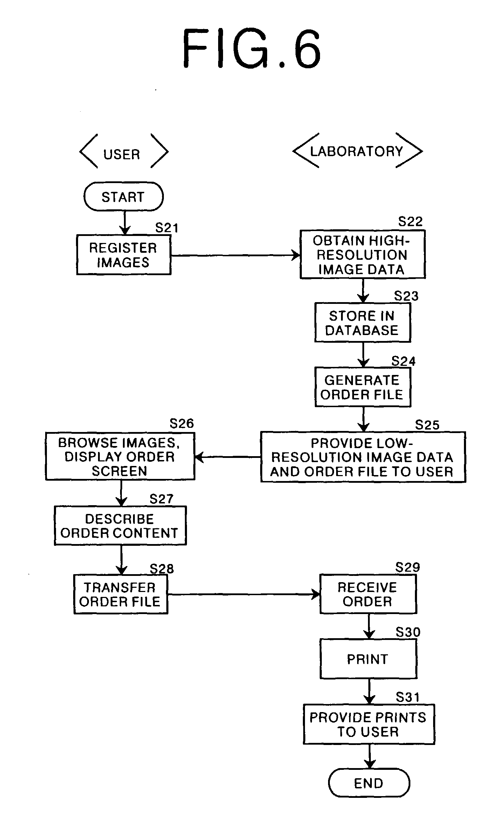

An operation of the second embodiment will be explained next. Figure 6 is a flow chart showing the operation of the second embodiment. The user brings a negative film directly to an order receiving store or to the laboratory 12 and images on the film are registered (Step S21). In the laboratory 12, the film brought in by the user is read by the reading means 13 and high-resolution image data SH representing the images recorded on the film are obtained (Step S22). Low-resolution image data SL having a resolution lower than the resolution of the high-resolution image data SH are also generated by the reading means 13. The high-resolution image data SH obtained in this manner are stored in the database 14 (Step S23). The high-resolution image data SH are input to the order file generating means 15 and thumbnail images are generated by reducing the images represented by the high-resolution image data SH. An index image in which the thumbnail images are laid out is also generated by the order file generating means 15. The order file F is generated by inserting blanks used for describing the quantity into the index image, as shown in Figure 2 (Step S24).

The low-resolution image data SL for displaying and confining the images on the user terminal 11 and the order file F for placing an order are provided to the user (Step S25). The low-resolution image data SL are provided by being disclosed only to the user on the network. By carrying out the registration described above, the user can determine the content of an order while confirming the images on the user terminal 11.

The user views the low-resolution image data SL by using web browser software or the like, and opens the order file F for placing an order. An order screen as shown in Figure 2 is displayed on the monitor of the user terminal 11 (Step S26). The user fills in the blanks with the quantity of prints of desired images and writes the order content in the order file F (Step S27). For confirmation of the order file F' in which the order content has been described, a confirmation screen as shown in Figure 4 is displayed, and the user clicks the OK button to confirm the order content. Meanwhile, if the order content is wrong, the user clicks the cancel button and describes the order information again. The order file F' in which the order content has been described in this manner is transferred to the laboratory 12 via the network 19 (Step S28).

The laboratory 12 receives the order file F' by using the order receiving means 16 (Step S29). The laboratory 12 reads the high-resolution image data SH from the database 14 in accordance with the order content described in the order file F' and outputs printed images by using the output means 17 (Step S30). The printed images are then provided to the user (Step S31) and the processing is completed.

In the first and the second embodiments described above, the order file F has a general file format such as the HTML format or the text format. However, the present invention is not limited to the above example, and the file format may be a special file format for easier processing by the laboratories 2 and 12. In this case, software dedicated to opening the order file F is recorded in a CD-R and provided to the user.

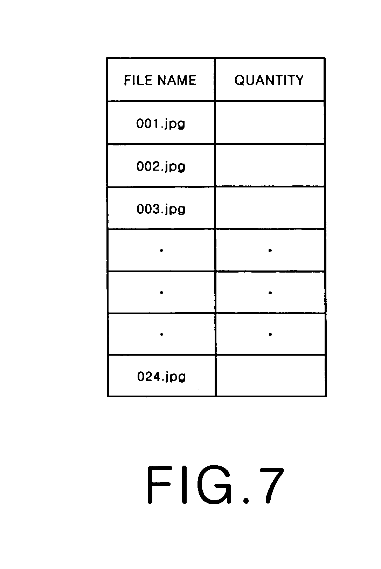

In the embodiments above, the order file F is generated by generating an index image having the blanks for writing the quantity as shown in Figure 2. However, as shown in Figure 7, the order file F may be generated by relating the file name of each image with the quantity of the image.

Furthermore, in the above embodiments, only the quantity is specified as the order information. However, the present invention is not limited to the above example, and the order file F may be generated in such a manner that a processing number for specifying the service content (such as additional printing or picture postcard generation), a size of a print, the quality of printing paper (glossy or non-glossy), thickness of the paper, the content of photographic processing, trimming, and the like can be selected. As the order information, information regarding a user, such as the name, the address, a phone number, a FAX number, and an E-mail address, may be included.

## Claims

1. A method of receiving an order for outputting a photographic image represented by digital image data, the order receiving method comprising the step of:
generating an order file enabling selection of the content of an order corresponding to the photographic image.

2. An order receiving method as claimed in Claim 1, wherein the order file has a general file format.

3. An order receiving method as claimed in Claim 1 or 2, further comprising the steps of:
providing the order file together with the digital image data to a user;
receiving order information regarding the photographic image, the information being generated based on the order file; and
outputting the photographic image based on the order information having been received.

4. An order receiving method as claimed in Claim 3, wherein the order file and the digital image data are provided to the user by being recorded in a removable recording medium.

5. An order receiving method as claimed in Claim 3, wherein the order file and the digital image data are provided to the user via a network.

6. An apparatus for receiving an order for outputting a photographic image represented by digital image data, the apparatus comprising:
order file generating means for generating an order file enabling selection of the content of an order corresponding to the photographic image.

7. An order receiving apparatus as claimed in Claim 6, characterized by that the order file has a general file format.

8. An order receiving apparatus as claimed in Claim 6 or 7, further comprising:
providing means for providing the order file and the digital image data to a user;
receiving means for receiving order information regarding the photographic image, the order information being generated based on the order file; and
output means for outputting the photographic image based on the order information having been received.

9. An order receiving apparatus as claimed in Claim 8, wherein the providing means provides the order file and the digital image data to the user by recording the order file and the digital image data in a removable recording medium.

10. An order receiving apparatus as claimed in Claim 8, wherein the providing means provides the order file and the digital image data to a user via a network.

11. A computer-readable recording medium storing a program to cause a computer to execute a method of receiving an order for outputting a photographic image represented by digital image data, the program comprising the procedure of:
generating an order file enabling selection of the content of an order corresponding to the photographic image.

12. A computer-readable recording medium as claimed in Claim 11, wherein the order file has a general file format.

13. A computer-readable recording medium as claimed in Claim 11 or 12, the program further comprising the procedures of:
providing the order file together with the digital image data to a user;
receiving order information regarding the photographic image, the information being generated based on the order file; and
outputting the photographic image based on the order information having been received.

14. A computer-readable recording medium as claimed in Claim 13, wherein the procedure of providing is a procedure of providing the order file and the digital image data to the user by recording the order file and the digital image data in a removable recording medium.

15. A computer-readable recording medium as claimed in Claim 13, wherein the procedure of providing is a procedure of providing the order file and the digital image data to the user via a network.
